## Europäisches Patentamt
## European Patent Office
## Office européen des brevets

(11) Veröffentlichungsnummer: **0 201 486**
**B1**

(12) **EUROPÄISCHE PATENTSCHRIFT**

(45) Veröffentlichungstag der Patentschrift: **11.04.90**

(21) Anmeldenummer: **85900058.0**

(22) Anmeldetag: **08.12.84**

(86) Internationale Anmeldenummer:
**PCT/DE84/00266**

(87) Internationale Veröffentlichungsnummer:
**WO 85/03174 18.07.85 Gazette 85/16**

(51) Int. Cl.⁵: **H 02 K 16/02,** H 02 K 19/04

(54) **INDUKTIONSMOTOR.**

(30) Priorität: **02.01.84 DE 3400018**
**01.06.84 DE 3420370**

(43) Veröffentlichungstag der Anmeldung:
**20.11.86 Patentblatt 86/47**

(45) Bekanntmachung des Hinweises auf die
Patenterteilung:
**11.04.90 Patentblatt 90/15**

(84) Benannte Vertragsstaaten:
**AT CH DE FR GB LI NL SE**

(56) Entgegenhaltungen:
**DE-A-1 613 791**
**FR-A- 720 950**
**FR-E- 751 408**
**FR-E-1 555 093**
**GB-A-1 041 909**
**US-A-1 675 960**

(73) Patentinhaber: **ROBERT BOSCH GMBH**
**Postfach 50**
**D-7000 Stuttgart 1 (DE)**

(72) Erfinder: **GERSTNER, Bruno**
**Laubenstrasse 65a**
**D-7582 Bühlertal (DE)**
Erfinder: **PFEIFFER, Rüdiger**
**Humboldstrasse 4**
**D-7580 Bühl (DE)**
Erfinder: **SENG, Berthold**
**Hebelstr. 4**
**D-7580 Bühl (DE)**

Courier Press, Leamington Spa, England.

## Beschreibung

Die Erfindung geht aus von einem Induktionsmotor nach der Gattung des Hauptanspruchs. Aus der US-A 1 675 960 ist ein Wechselstrom-Induktionsmotor mit einem zweiteiligen Rotor bekannt. Zwischen einem fest mit der Abtriebswelle verbundenen Rotorinnenteil und dem Stator ist ein auf der Abtriebswelle frei drehbares äußeres Rotorteil vorgesehen. Mit diesem äußeren Rotorteil wird ein synchronumlaufendes Drehfeld zum asynchronen Antrieb des inneren Rotorteils erzeugt. Dieser Motor benötigt zum Betrieb zusätzlich Gleichstrom zur Erzeugung eines Magnetfeldes im äußeren Rotorteil und es ist eine Statorhilfswicklung zum Motorstart erforderlich.

Weiterhin ist bereits ein Motor vorgeschlagen worden (Feinwerktechnik und Meßtechnik 87 (1979), S.163 ff) bei dem zur Erzeugung eines Anlaufdrehmomentes zwischen Rotor und Stator der Luftspalt mit veränderlicher Breite ausgebildet ist, so daß sich eine definierte Ruhelage des permanentmagnetisch erregten Rotors ergibt, welche verschieden ist von der Magnetisierungsrichtung des Stators. Beim Anlegen des Statorfeldes wird auf den Rotor eine Kraft in Umfangsrichtung ausgeübt, wodurch dieser, gegebenenfalls nach einer oder mehreren Drehschwingungen, im Synchronismus zum Statorfeld kommt und mit diesem synchron rotiert. Der Anlauf des Motors ist jedoch nur dann möglich, wenn am Rotor sehr geringe Kräfte angreifen.

Durch die kleinen Anlaufmomente derartiger Motoren ist ihre Einsatzmöglichkeit begrenzt.

Aus der DE-PS 1 199 390 ist ein Einphaseninduktionsmotor bekannt, dessen Rotor auf einer Antriebswelle um einen bestimmten Winkel frei drehbar ist, bevor er in kraftschlüssige Verbindung mit der Antriebswelle gerät. Hierbei ist der Rotor zunächst axial gegen den Stator verschoben und wird durch Magnetkräfte gleichzeitig in axialer Richtung und in Umfangsrichtung beschleunigt, bevor er nach Überwindung einer axialen Federkraft in eine kraftschlüssige Verbindung mit der Antriebswelle gelangt Wegen der nur teilweisen Überdeckung von Rotor und Stator und wegen des Bremsmomentes durch die Antriebswelle sind auch die Anzugskräfte derartiger Motorbauarten begrenzt.

Weiterhin sind beispielsweise für Pumpenantriebe Spaltpolmotoren verwendbar. Auch diese besitzen jedoch trotz relativ großer Bauformem nur kleine Anzugsmomente und ihr Wirkungsgrad ist verhältnismäßig schlecht.

Induktionsmotoren nach der Gattung des Hauptanspruches besitzen keine definierte Drehrichtung, wenn nicht zusätzliche Maßnahmen zur Festlegung der Drehrichtung getroffen werden. Eine mechanische Anordnung zur Festlegung einer definierten Drehrichtung des Motors ist beispielsweise aus der GB-PS 1 413 782 bekannt. Andere Gestaltungsmöglichkeiten zur Erzielung einer definierten Drehrichtung des Motors bestehen beispielsweise im Einbau von Freilaufvorrichtungen mit Kugel- oder Rollen-Klemmkörpern in entsprechenden Ausnehmungen eines Freilaufkörpers, wodurch nur eine Drehrichtung des Motors auf eine Antriebswelle übertragen wird. Solche Anordnungen sind beispielsweise bekannt von elektrischen Anlassern für Kraftfahrzeuge.

Vorteile der Erfindung

Der erfindungsgemäße Induktionsmotor mit den kennzeichnenden Merkmalen des Hauptanspruches hat demgegenüber den Vorteil, daß bei kleiner, einfacher und preiswerter Bauweise ein hohes Anlaufmoment erreicht wird, so daß das hohe Betriebsmoment des Motors durch zu geringe Anzugsmomente aus dem Stillstand heraus nicht geschmälert wird. Durch die erfindungsgemäße Bauweise erreicht man einen gleichförmigen, asynchronen Hochlauf des Motors, welcher bei sehr einfachem Aufbau kurzschlußfest ist, keine mechanischen Geräusche verursacht — etwa durch zeitlich verzögert wirkende mechanische Kupplungen - und wegen einer Mindestzahl von Verschleißteilen eine hohe Lebensdauer aufweist.

Durch die in den Unteransprüchen aufgeführten Maßnahmen sind vorteilhafte Weiterbildungen und Verbesserungen des im Hauptanspruch angegebenen Motors möglich. Besonders vorteilhaft ist die Gestaltung des Rotoraußenteils als elektrisch leitfähiger Hohlzylinder, welcher vorzugsweise aus Kupfer besteht, weil dieser besonders einfach herstellbar ist und eine sehr hohe Leitfähigkeit besitzt.

Statt aus einem gut leitfähigen Hohlzylinders kann der Rotor jedoch auch aus einem unterbrochenen Eisenzylinder hergestellt werden, wobei im die Zwischenräume Kupferstäbe eingelegt werden. Hierbei bilden die Eisenteile Flußleitstücke zwischem Rotor und Stator, welche den magnetischen Widerstand verringern. Eine weitere Möglichkeit zur Gestaltung des Rotors ist die Verwendung eines Kurzschlußkäfigs, welcher eine sehr geringe Masse und somit ein geringers Trägheitsmoment besitzt.

Eine besonders vorteilhafte Bauweise ergibt sich, wenn das Rotoraußenteil becherförmig ausgebildet wird und im Bereich des Becherbodens, vorzugsweise mittels Flansch und Splint, mechanisch mit der Antriebswelle verbunden ist. Die Antriebswelle wird zweckmäßigerweise mit abgesetzten Durchmessern derart ausgebildet, daß das Rotorinnenteil frei drehbar auf einem dünneren Wellenabschnitt innerhalb des Rotoraußenteils gelagert ist, welches einseitig an den dickeren Wellenabschnitt angrenzt. Hierdurch ergibt sich bei geringem fertigungstechnischem Mehraufwand gegenüber einer durchgehend gleichstarken Welle ein größerer Freiraum innerhalb des Rotoraußenteils, so daß darin mehr Permanentmagnetmasse untergebracht und ferner eine geringere Reibung erzielt werden kann. Außerdem bildet der Wellenabsatz einen Anschlag zur definierten Halterung des Rotorinnenteils, so daß die Lagerung desselben vereinfacht wird.

Am Rotorinnenteil ist bei einer bevorzugten Bauform ein Lüfterrad angeordnet, welches unabhängig von der angeschlossenen Last mit dem Rotorinnenteil rotiert und das Rotoraußenteil kühlt, auch bei Stillstand und niedrigen Drehzahlen des letzteren.

Eine besonders einfache und preiswerte Bauweise des Motorsergibt sich bei zweipoliger Gestaltung des Rotors und des Stators. Bei dieser Bauform können einfache Blechschnitte verwendet werden im Stator und die Magnetisierung des Rotors ist leichter als bei höherer Polpaarzahl desselben. Das Rotorinnenteil ist dabei zweckmäßigerweise diametral magnetisiert, weil diese Art der Magnetisierung einfacher aufzubringen ist als beispielsweise eine radiale Magnetisierung. Das Rotorinnenteil kann dabei mit Vorteil sowohl aus Permanentmagnet-Teilschalen wie auch massiv ausgebildet werden.

Bei der Verwendung des erfindungsgemäßen Motors für einen Pumpenantrieb, beispielsweise für die Laugenpumpe einer Waschmaschine, spielt die Drehrichtung des Motors grundsätzlich keine Rolle, weil die Pumpe so gestaltet werden kann, daß sie bei beiden Drehrichtungen in gleicher Weise arbeitet. Wenn nur eine Drehrichtung des erfindungsgemäßen Motors zulässig ist, wird gemäß den entsprechenden Weiterbildungen der Erfindung ein Freilauf vorgesehen, welcher als Drehrichtungs-Sperrvorrichtung in bekannter Weise aufgebaut sein kann. Diese wird zwischen Rotorinnenteil und Rotoraußenteil angeordnet oder zwischen einem feststehenden Motorteil wie Lagerschild oder dgl. und dem Rotoraußenteil oder dem Rotorinnenteil. Durch Verwendung einer Drehrichtungs-Sperrvorrichtung kann eine angeschlossene Pumpe oder dgl. für eine definierte Drehrichtung ausgelegt werden, wodurch der Gesamtwirkungsgrad der Anordnung mit geringem Mehraufwand gesteigert wird.

Zeichnung

Ausführungsbeispiele der Erfindung sind in der Zeichnung dargestellt und in der nachfolgenden Beschreibung näher erläutert. Es zeigen Figur 1 einen Querschnitt durch den erfindungsgemäßen Induktionsmotor, Figur 2 einen Längsschnitt durch dessen Rotor und Figuren 3 bis 5 drei verschiedene Gestaltungsmöglichkeiten von Drehrichtungs-Sperrvorrichtungen.

Beschreibung des Ausführungsbeispieles

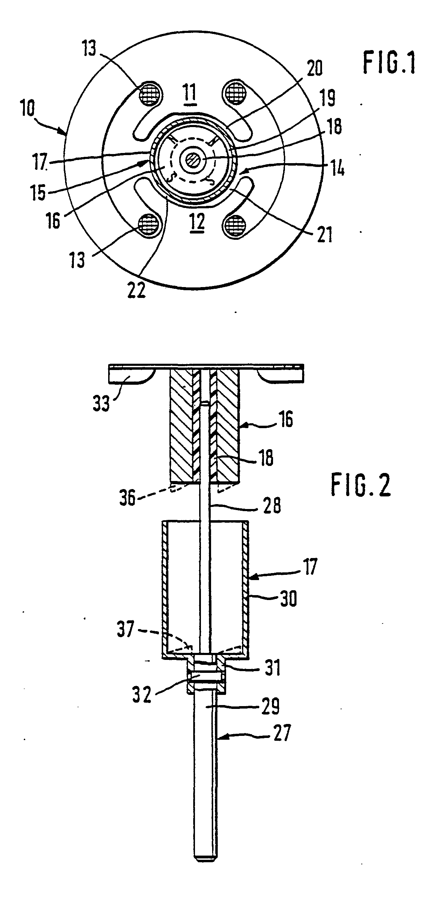

In Figur 1 ist mit 10 der Stator eines Induktionsmotors bezeichnet, welcher als Einphasen-Induktionsmotor ausgebildet ist, wie er beispielsweise für die Laugenpumpe einer Waschmaschine verwendbar ist. Der Stator 10 besitzt zwei ausgeprägte Pole 11 und 12, welche mit einer Einphasen-Wechselstromwicklung 13 bewickelt sind. Die Wicklung kann jedoch auch auf einem Schenkel des Stators oder auf gegenüberliegenden Schenkeln des Stators angeordnet sein.

Den Stator 10 trennt ein Luftspalt 14 von einem Rotor 15, welcher aus einem Rotorinnenteil 16 und einem Rotoraußenteil 17 zusammengesetzt ist. Das Rotorinnenteil 16 trägt in der Mitte eine Nabe 18 aus Kunststoff, insbesondere aus Polytetrafluoräthylen, als Lager für den Rotor.

Der Luftspalt 14 des erfindungsgemäßen Induktionsmotors teilt sich auf in einen inneren Luftspalt 19 zwischen dem Rotorinnenteil 16 und dem Rotoraußenteil 17 sowie einen äußeren Luftspalt 20 zwischen dem Rotoraußenteil 17 und dem Stator 10. Aufgrund dieser beiden Luftspalte und getrennter Lagerungen sind das Rotorinnenteil 16 und das Rotoraußenteil 17 unabhängig voneinander verdrehbar. Das Rotorinnenteil 16 besteht im gezeichneten Ausführungsbeispiel aus einem massiven Permannentmagnetteil, welches zweipolig diametral magnetisiert ist. Anstelle einer massiven Bauform des Rotorinnenteils 16 kann dieses auch aus zwei Permanentmagnet-Halbschalen zusammengesetzt werden, welche radial oder diametral magnetisiert sind, wie es in Figur 1 gestrichelt angedeutet ist.

Der äußere Luftspalt 20 besitzt eine über dem Rotorumfang veränderliche Luftspaltbreite, symmetrisch zur Längsachse des Motors. So ergibt sich jeweils an radial gegenüberliegenden Punkten der Polschuhe ein gleicher, jeweils schmälerer oder breiterer Luftspalt, so daß der Permanentmagnetrotor eine definierte Ruhelage einnimmt. Der Bereich großer Luftspaltbreite ist mit 21, der Bereich kleiner Luftspaltbreite mit 22 bezeichnet. Die Magnetisierungsrichtung des in Figur 1 in Ruhelage gezeigten Rotors weicht von der Feldrichtung des Stators ab, so daß sich bei Stromfluß in der Statorwicklung 13 ein Drehmoment zwischen Rotor und Stator ergibt.

Aus Figur 2 ist der zweiteilige Aufbau des Rotors deutlich erkennbar, wobei das Rotorinnenteil 16 außerhalb des Rotoraußenteils 17 vor dem Zusammenfügen der Teile gezeichnet ist. Eine Antriebswelle 27, welche mit abgesetzten Durchmessern ausgebildet ist, durchdringt beide Rotorteile. Auf ihrem dünneren Abschmitt 28 ist das Rotorinnenteil 16 mit der Nabe 18 frei drehbar gelagert, während auf ihrem dickeren Abschnitt 29 das becherförmig ausgebildete Rotoraußenteil 17 im Bereich des Becherbodens mechanisch befestigt ist. Das Rotoraußenteil 17 besteht dabei vorzugsweise aus einem Hohlzylinder 30 aus Kupfer, welcher sich im Bereich des Becherbodens in einem Flansch 31 fortsetzt, der mittels eines Splintes 32 auf dem dickeren Abschnitt 29 der Antriebswelle 27 verdrehsicher gehalten ist.

Auf der dem offenen Ende des Hohlzylinders 30 zugeordneten Stirnfläche des Rotorinnerteils 16 ist ein Lüfter 33 befestigt, welcher mit dem frei drehbaren Rotorinnenteil 16 umläuft und somit stets für eine ausreichende Kühlung des Rotoraußenteils 17 sorgt.

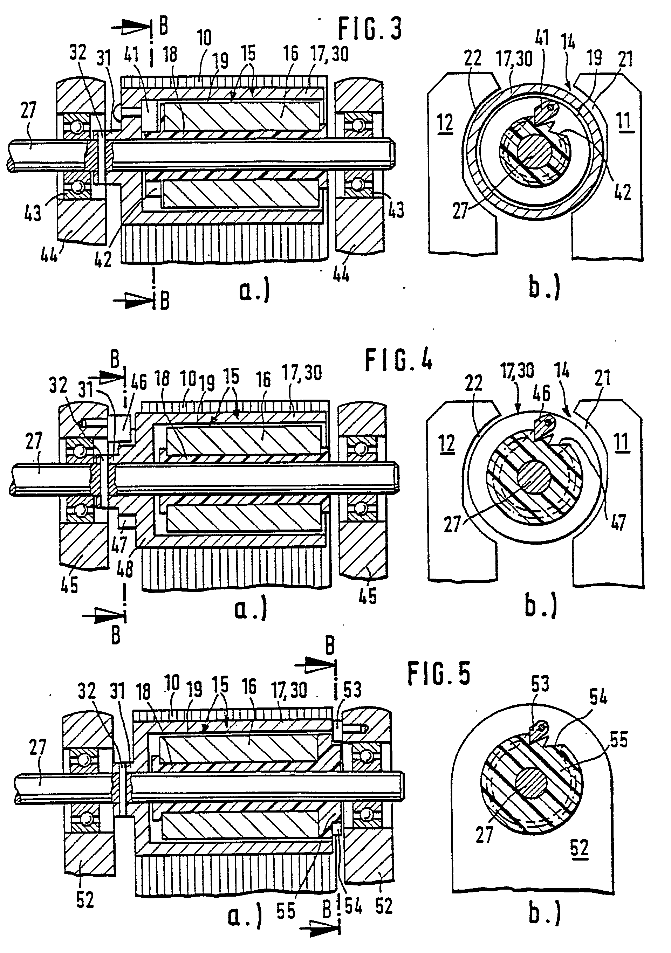

Am Boden des Rotoraußenteils und an der zugeordneten Stirnfläche des Rotorinnenteils ist strichpunktiert weiterhin noch ein als Drehrichtungs-Sperrvorrichtung wirkender Freilauf angedeutet mit schematisch gezeichneten Sperrklinken 36 und 37, welche nur eine Verdrehung des Rotorinnentrils zum Rotoraußenteil in einer Drehrichtung erlauben. Hierdurch kann der Motor nur in einer Drehrichtung anlaufen, so daß er mit dieser Zusatzmaßnahme auch für Anwendungen geeignet ist, bei denen nur eine Drehrichtung zulässig ist. Die Drehrichtungs-Sperrvorrichtung ist später anhand der Figuren 3 bis 5 noch näher erläutert.

Die erfindungsgemäße Anordnung wirkt folgendermaßen:

Nach dem Anlegen einer Wechselspannung an die Wicklung 13 entsteht ein in Figur 1 vertikales magnetisches Wechselfeld, welches gegenüber dem permanentmagnetischem Feld des Rotorinnenteils 16 um einen vorgegebenen Winkel in der Ruhelage verdreht ist. Der Permanentmagnet-Rotor richtet sich nämlich in der Ruhelage so aus, daß der Fluß den Weg des geringsten magnetischen Widerstandes findet, d.h., in der in Figur 1 gezeichneten N-S-Stellung. Nach dem Einschalten des Statorfeldes kann das Rotorinnenteil 16 ungehindert auf dem Abschnitt 28 der Antriebswelle 27 Drehschwingungen ausführen, solange bis die Beschleunigung ausreicht, daß es netzsynchrom umläuft. Bei einer zweipoligen Bauweise von Stator und Rotor und einer Netzfrequenz von 50 Hz des Stromes in der Statorwicklung 13 sind dies 3000 U/min. Das Rotorinnenteil 16 ist nicht durch die angeschlossene Last beaufschlagt, so daß dem Anlauf des Motor insofern nichts entgegensteht. Beim Drehen des Permanentmagnet-Rotorinnenteils 16 wird nun eim Drehfeld erzeugt, welches in dem Rotoraußenteil 17 Ströme induziert und dieses in Drehung versetzt. Das Rotoraußenteil 17 läuft dann asynchron mit einem von der außem angeschlossenen Last ahhängigen Schlupf in dem vom Rotorinnenteil 16 erzeugten Drehfeld um. Die Drehzahl des Rotorinnenteils 16, beim Ausführungsbeispiels des Hohlzylinders 30 mit der Welle 27, liegt daher stets unter der synchronen Drehzahl des Rotorinnenteils.

Durch die erfindungsgemäße Bauart erhält man einen kleinen, leichten und preiswerten Motor mit hohem Anzugsmoment, welcher bekannte Motoren mit wesentlich größerem Bauvolumen, insbesondere Spaltpolmotoren, ersetzen kann. Das beschriebene Ausführungsbeispiel stellt nur eine mögliche Bauform des erfindungsgemäßen Motors dar, es können selbstverständlich statt der zweipoligen Bauweise auch mehrpolige Anordnungen jeweils von Rotor und Stator verwendet werden. Weiterhin muß der Hohlzylinder 30 nicht einseitig offen sein, sondern kann auch beidseitig geschlossen oder beidseitig offen, bzw. durch ein elektrisch nicht leitfähiges Teil abgeschlossen sein. Das Lüfterrad 33 kann bei geringer Belastung des Motors entfallen.

Gegenüber bekannten Asynchronmotoren wird bei der erfindungsgemäßen Motorbauart ein Großteil des Magnetisierungsbedarfes nicht von der Wicklung 13, bzw. von deren Wechselspannungsversorgung geliefert, sondern vom synchronrotierenden Permanentmagnet-Rotorinnenteil 16 gedeckt. Dieses erzeugt ein umlaufendes Drehfeld ohne Zuhilfenahme von Zusatzwicklungen, ohne die beispielsweise ein Spaltpolmotor nicht anläuft. Der erfindungsgemäße Motor hat trotz Vergrößerung des Luftspaltes 14 durch das Rotoraußenteil 17 einen hohen Wirkungsgrad und ein geringes Leistungseinsatzgewicht, sowie ein geringes Volumen. Aufbau und Fertigung des Motors sind einfach, so daß er sich mit geringem verfahrenstechnischem Aufwand herstellen läßt. Die Zahl der Verschleißteile ist auf ein Minimum reduziert.

Die Figuren 3 bis 5 zeigen weitere konstruktive Abwandlungen eines Motors mit Drehrichtungssperre, wie sie anhand von Figur 2 im Prinzip bereits erläutert worden ist. In den Figuren 3 bis 5 sind gleiche Bezugszeichen für gleiche Teile wie in den Figuren 1 und 2 verwendet, auch wenn in konstruktiver Hinsicht unterschiedliche Gestaltungen vorliegen.

Figur 3 zeigt einen Induktionsmotor, bei dem zwischen Rotorinnenteil 16 und Rotoraußenteil 17 eine Drehrichtungs-Sperrvorrichtung angeordnet ist. Entsprechend den in Figur 2 schematisch gezeichneten Teilen 36 und 37 sind bei der Anordnung gemäß Figur 3 eine Sperrklinke 41 und eine Verzahnung 42 vorgesehen. Die Sperrklinke 41 ist schwenkbar am Rotoraußenteil gehalten und blockiert durch ihren Eingriff in die Verzahnung 42 eine Drehrichtung des Rotorinnenteils 16. Die Sperrklinke 41 ist am Boden des becherförmigen Rotoraußenteils 17, 30 schwenkbar befestigt, die Verzahnung 42 ist in einen axialen Vorsprung der Kunststoff-Nabe 18 eingearbeitet.

Wie aus Figur 3a ersichtlich, ist das Rotoraußenteil 17 mit der Antriebswelle 27 in zwei Kugellagern 43 in je einem Lagerschild 44 drehbar gelagert.

Figur 3b zeigt einen Schnitt nach der Linie B-B in Figur 3a, wobei die Drehrichtungs-Sperrvorrichtung mit der Sperrklinke 41 und der Verzahnung 42 noch deutlicher erkennbar sind. Mit der gezeigten Anordnung ist eine Drehung des Rotorinnenteils im Uhrzeigersinn blockiert, während bei einer Drehung entgegen dem Uhrzeigersinn die Sperrklinke 41 angehoben wird und das Rotorinnenteil 16 sich unter der Sperrklinke 41 durchzudrehen vermag. Das permanentmagnetische Rotorinnenteil 16 kann hierbei das relativ große Massenträgheitsmoment des Rotoraußenteils 17 nicht überwinden und dieses nicht beschleunigen, weshalb die Drehrichtungs-Sperrvorrichtung in Form der mechanischen Sperrglieder unmittelbar zwischen Rotorinnenteil 16 und Rotoraußenteil 17 angeordnet sein kann.

Figur 4 zeigt eine Anordnung, bei der die Drehrichtungs-Sperrvorrichtung zwischen dem Rotoraußenteil 17 und einer ortsfesten Halterung des Motors angeordnet ist. Als ortsfeste Halterung dient der linke von zwei Lagerschilden 45, an dem eine Sperrklinke 46 schwenkbar gehalten ist. Die Sperrklinke 46 wirkt zusammen mit einer Verzahnung 47 am Boden 48 des Rotoraußenteils 17. Dieses besitzt an seinem Boden einen Flansch 31, an dem die Verzahnung 47 radial nach außen vorspringt (Figur 4a).

Figur 4b zeigt einen Schnitt nach der Linie B-B in Figur 4a, welcher direkt durch die Sperrklinke 46 und die Verzahnung 47 hindurchgelegt ist. Die Drehrichtungs-Sperrvorrichtung blockiert in diesem Fall eine Drehung des Rotoraußenteils im Uhrzeigersinn, wobei das Rotorinnenteil 16 derart dimensioniert sein muß, daß es bei einem bestimmten Lastmoment außer Tritt fällt, so daß es bei festgebremstem Rotoraußenteil 17 nicht anlaufen kann. Wird also die eine Drehrichtung des Rotoraußenteils 17 gesperrt, so kann das Permanentmagnet-Rotorinnenteil 16 nur in die gewünschte andere Drehrichtung entgegen dem Uhrzeigersinn anlaufen, womit nun auch die Drehrichtung des Rotoraußenteils 17 und mit diesem die Drehrichtung der Antriebswelle 27 im gleichen Sinne festgelegt sind.

Die Figuren 5a und 5b zeigen eine weitere Variante der Drehrichtungs-Sperrvorrichtung, welche hier zwischen dem Rotorinnenteil 16 und einer ortsfesten Halterung in Form des rechten Lagerschildes 52 des Motors angeordnet ist. Als Sperrglied dient wiederum eine Sperrklinke 53, welche am Lagerschild 52 schwenkbar gehalten ist und mit einer Verzahnung 54 am Rotorinnenteil 16 zusammenwirkt.

Die Verzahnung 54 ist in eine radiale Verlängerung der Nabe 18 des Rotorinnenteils 16 eingearbeitet (Figur 5a).

Figur 5b zeigt einen Schnitt nach der Linie B-B in Figur 5a, aus dem die Gestaltung der Drehrichtungs-Sperrvorrichtung deutlich erkennbar ist. Die Sperrklinke 53 greift derart in die Verzahnung 54 ein, daß eine Drehung des Rotorinnenteils im Uhrzeigersinn gesperrt wird, während die Drehrichtung entgegen dem Uhrzeigersinn durch Heben der Sperrklinke 53 frei ist. Solange aber das Rotorinnenteil gesperrt bleibt, werden im Rotoraußenteil 17 keine Spannungen induziert, d.h., daß das Rotoraußenteil 17 und die Antriebswelle 27 sich wiederum nur in der vorgegebenen Drehrichtung entgegen dem Uhrzeigersinn drehen können.

**Patentansprüche**

1. Einphasen-Induktionsmotor, vorzugsweise für einen Pumpen-Antrieb, mit einem durch ein Wechselfeld elektromagnetisch erregten Stator (10), wobei vorzugsweise der Luftspalt (19, 20) zwischen Rotor (16, 17) und Stator derart ausgebildet ist, daß sich eine Ruhelage des Rotors einstellt, deren Feldausrichtung verschieden ist von der Magnetisierungsrichtung des Stators zur Erzeugung eines Anlaufdrehmomentes, und wobei der Rotor zweiteilig ausgebildet ist mit einem synchron zum Statorfeed rotierenden, auf der Rotorwelle frei drehbaren Rotorteil (16) und einem weiteren Rotorteil (17), welches nach Art eines Kurzschlußkäfigs als asynchron rotierendes Antriebsteil mit einer Antriebswelle in mechanischer Verbindung steht, dadurch gekennzeichnet, daß auf der Antriebswelle (27) freidrehend ein synchrom zum Statorfeld umlaufender Permanentmagnetrotor (16) sitzt und daß im Luftspalt (14) zwischen dem Stator (10) und dem Permanentmagnetrotor (16) ein elektrisch leitfähiges Rotoraußenteil (17) angeordnet ist, welches asynchron zum Stator (10) und zum Rotorinnenteil (16) umläuft und mit der Antriebswelle (27) gekoppelt ist.

2. Induktionsmotor nach Anspruch 1, dadurch gekennzeichnet, daß das Rotoraußenteil (17) als elektrisch leitfähiger Hohlzylinder (30) ausgebildet ist.

3. Induktionsmotor nach Anspruch 1 oder 2, dadurch gekennzeichnet, daß das Rotoraußenteil (17) aus einem Kupfer-Hohlzylinder (30) besteht.

4. Induktionsmotor nach einem der vorhergehenden Ansprüche, dadurch gekennzeichnet, daß das Rotoraußenteil (17) becherförmig ausgebildet und im Bereich des Becherbodens mechanisch mit der Antriebswelle (27) verbunden ist.

5. Induktionsmotor nach einem der vorhergehenden Ansprüche, dadurch gekennzeichnet, daß die Antriebswelle (27) mit abgesetztem Durchmesser ausgebildet ist, wobei das Rotorinnenteil (16) frei drehbar auf einem dünneren Wellenabschnitt (28) innerhalb des Rotoraußenteils (17) angeordnet ist, welches einseitig mit dem dickeren Wellenabschnitt (29) verbunden ist.

6. Induktionsmotor nach Anspruch 5, dadurch gekennzeichnet, daß das Rotoraußenteil (17) starr auf dem dickeren Wellenabschnitt (29) befestigt ist.

7. Induktionsmotor nach einem der vorhergehenden Ansprüche, dadurch gekennzeichnet, daß am Rotorinnenteil (16) ein Lüfter (33) angeordnet ist.

8. Induktionsmotor nach einem der vorhergehenden Ansprüche, dadurch gekennzeichnet, daß das permanent-magnetische Rotorinnenteil (16) zweipolig ausgebildet und diametral magnetisiert ist.

9. Induktionsmotor nach einem der vorhergehenden Ansprüche, dadurch gekennzeichnet, daß das Rotorinnenteil (16) aus zwei Permanentmagnet-Halbschalen zusammengesetzt ist.

10. Induktionsmotor nach einem der Ansprüche 1 bis 8, dadurch gekennzeichnet, daß das Rotorinnenteil (16) aus Permanentmagnet-Werkstoff einteilig ausgebildet ist.

11. Induktionsmotor nach einem der vorhergehenden Ansprüche, dadurch gekennzeichnet, daß in das Rotorinnenteil (16) axial eine vorzugsweise aus Kunststoff, insbesondere aus Polytetrafluoräthylen, ausgebildete Nabe (18) eingesetzt ist, welche mit geringem Lagerspiel auf der Antriebswelle (27, 28) sitzt.

12. Induktionsmotor nach einem der vorhergehenden Ansprüche, dadurch gekennzeichnet, daß der Stator (10) asymmetrisch ausgebildet ist mit veränderlicher Luftspaltbreite (14, 21, 22) über dem Rotorumfang zur Erzeugung eines Anlaufdrehmomentes.

13. Induktionsmotor nach einem der vorhergehenden Ansprüche, dadurch gekennzeichnet, daß zwischen Rotorinnenteil (16) und Rotoraußenteil (17) eine Drehrichtungs-Sperrvorrichtung (36, 37) angeordnet ist, welche eine Drehrichtung des Rotorinnenteils (16) sperrt zur Festlegung einer definierten Drehrichtung der Antriebswelle (27).

14. Induktionsmotor nach Anspruch 13, dadurch gekennzeichnet, daß die Drehrichtungs-Sperrvorrichtung aus wenigstens einer schwenkbar am Rotoraußenteil (17) gehaltenen Sperrklinke (53) und einer Verzahnung (54) am Rotorinnenteil (16) gebildet ist.

15. Induktionsmotor nach einem der Ansprüche 1 bis 12, dadurch gekennzeichnet, daß die Drehrichtungs-Sperrvorrichtung (36, 37) zwischen dem Rotoraußenteil (17, 30) und einer ortsfesten Halterung (45) des Motors angeordnet ist.

16. Induktionsmotor nach Anspruch 15, dadurch gekennzeichnet, daß die Drehrichtungs-Sperrvorrichtung aus wenigstens einer schwenkbar am einem Lagerschild (45) des Motors gehaltenen Sperrklinke (46) und einer Verzahnung (47) im Bereich des Bodens (48) des becherförmigen Rotoraußenteils (17) besteht.

17. Induktionsmotor nach einem der Ansprüche 1 bis 12, dadurch gekennzeichnet, daß die Drehrichtungs-Sperrvorrichtung (36, 37) zwischen dem Rotorinnenteil (16) und einer ortsfesten Halterung (52) des Motors angeordnet ist.

18. Induktionsmotor nach Anspruch 17, dadurch gekennzeichnet, daß die Drehrichtungs-Spervorrichtung aus wenigstens einer schwenkbar an einem Lagerschild (52) des Motors gehaltenen Sperrklinke (53) und einer Verzahnung (54) am Rotorinnenteil (16) besteht.

**Revendications**

1. Moteur à induction monophasé, de préférence destiné à la commande d'une pompe, avec un stator (10) excité électromagnétiquement par un champ magnétique alternatif, dans lequel de préférence l'entrefer (19, 20) entre rotor (16, 17) et stator est réalisé, de manière qu'il s'établisse un état d'équilibre du rotor, dont la direction du champ magnétique est différente de la direction de magnétisation du stator pour la création d'un couple de démarrage, et dans lequel le rotor est composé de deux parties, dont une partie (16) peut tourner librement sur l'arbre de rotor, en étant entraînée en synchronisme avec le champ magnétique du stator et dont l'autre partie (17) mécaniquement liée avec l'arbre moteur est du type cage en court-circuit comme pièce d'entraînement en rotation asynchrone, caractérisé en ce que sur l'arbre moteur (27) est situé en rotation libre un rotor aimant permanent (16) tournant en synchronisme par rapport au stator et en ce que dans l'entrefer (14) entre le stator (10) et le rotor aimant permanent (16) est placée une partie extérieure de rotor (17) conductrice de l'électricité, qui tourne de façon asynchrone par rapport au stator (10) et par rapport à la partie intérieure du rotor (16) et est couplée avec l'arbre moteur (27).

2. Moteur à induction selon la revendication 1, caractérisé en ce que la partie extérieure de rotor (17) est réalisée comme un cylindre creux (30) conducteur de l'électricité.

3. Moteur à induction selon l'une ou l'autre des revendications 1 ou 2, caractérisé en ce que la partie extérieure du rotor (17) se compose d'un cylindre creux en cuivre (30).

4. Moteur à induction selon l'une quelconque des revendications précédentes, caractérisé en ce que la partie extérieure du rotor (17) est réalisée en forme de gobelet et est reliée mécaniquement à l'arbre moteur (27) dans la zone du fond du gobelet.

5. Moteur à induction selon l'une quelconque des revendications précédentes, caractérisé en ce que l'arbre moteur (27) est réalisé en un diamètre en gradins, la partie intérieure du rotor (16) étant disposée en rotation libre sur une section plus mince de l'arbre (28) à l'intérieur de la partie extérieure du rotor (17) qui elle-même est reliée d'un côté au tronçon d'arbre (29) plus épais.

6. Moteur à induction selon la revendication 5, caractérisé en ce que la partie extérieure du rotor (17) est fixée rigidement sur le tronçon d'arbre plus épais (29).

7. Moteur à induction selon l'une ou l'autre des revendications précédentes, caractérisé en ce qu'un ventilateur (33) est placé sur la partie intérieure du rotor (16).

8. Moteur à induction selon l'une ou l'autre des revendications précédentes, caractérisé en ce que la partie intérieure du rotor (16) en magnétisme permanent est réalisée bipolaire et est magnétisée diamétralement.

9. Moteur à induction selon l'une quelconque des revendications précédentes, caractérisé en ce que la partie intérieure du rotor (16) est constituée de deux demi-coquilles d'aimant permanent.

10. Moteur à induction selon l'une quelconque des revendications 1 à 8, caractérisé en ce que la partie intérieure du rotor (16) est réalisée en une seule pièce dans un matériau d'aimant permanent.

11. Moteur à induction selon l'une quelconque des revendications précédentes, caractérisé en ce que dans la partie intérieure du rotor (16) est placé axialement un moyeu (18) réalisé de préférence en matière synthétique, en particulier en polytétrafluoréthylène et qui est situé avec un faible jeu de coussinet sur l'arbre moteur (27, 28).

12. Moteur à induction selon l'une quelconque des revendications précédentes, caractérisé en ce que le stator (10) est réalisé de façon asymétrique, avec une largeur d'entrefer variable (14, 21, 22) le long de la périphérie du rotor pour obtenir un couple de démarrage.

13. Moteur à induction selon l'une quelconque des revendications précédentes, caractérisé en ce qu'entre la partie intérieure du rotor (16) et la partie extérieure (17) du rotor est placé un dispositif de blocage (36, 37) du sens de rotation qui interdit un sens de rotation de la partie intérieure du rotor (16) pour fixer un sens de rotation bien défini pour l'arbre moteur (27).

14. Moteur à induction selon la revendication 13, caractérisé en ce que le dispositif de blocage de sens de rotation est formé d'au moins un cliquet de blocage (53) fixé à la partie extérieure du rotor (17) et pouvant pivoter et d'une denture (54) réalisée sur la partie intérieure du rotor (16).

15. Moteur à induction selon l'une quelconque des revendications 1 à 12, caractérisé en ce que le dispositif de blocage de sens de rotation (36, 37) est placé entre la partie extérieure du rotor (17, 30) et un support de palier fixe du moteur (45).

16. Moteur à induction selon la revendication 15, caractérisé en ce que le dispositif.de blocage du sens de rotation se compose d'au moins un cliquet de blocage (46) fixé à un flasque de palier (45) et pouvant pivoter et d'une denture (47) située dans la zone du fond (48) de la partie extérieure du rotor (17) en forme de gobelet.

17. Moteur à induction selon l'une quelconque des revendications 1 à 12, caractérisé en ce que le dispositif de blocage du sens de rotation (36, 37) est placé entre la partie intérieure de rotor (16) et un support fixe de palier (52) du moteur.

18. Moteur à induction selon la revendication 17, caractérisé en ce que le dispositif de blocage de sens de rotation comprend au moins un cliquet d'arrêt (53) fixé à un flasque de palier (52) du moteur en pouvant pivoter et une denture (54) sur la partie intérieure du moteur (16).

**Claims**

1. Single-phase induction motor, preferably for a pump drive, with a stator (10), electromagnetically excited by an alternating field, the air gap (19, 20) between rotor (16, 17) and stator preferably being designed in such a way that a rest position of the rotor is established, the field alignment of which is different from the direction of magnetization of the stator for the generation of a starting torque, and the rotor being of two-part design, with one rotor part (16) which is freely rotatable on the rotor shaft and rotates synchronously with the stator field, and a further rotor part (17), which in the manner of a squirrel cage is in mechanical connection with a drive shaft as asynchronously rotating drive part, characterized in that a permanent-magnet rotor (16), rotating synchronously with the stator field, is seated freely rotatingly on the drive shaft (27) and in that in the air gap (14) between the stator (10) and the permanent-magnet rotor (16) is arranged an electrically conductive outer rotor part (17), which rotates asynchronously with respect to the stator (10) and with respect to the inner rotor part (16) and is coupled to the drive shaft (27).

2. Induction motor according to Claim 1, characterized in that the outer rotor part (17) is designed as an electrically conductive hollow cylinder (30).

3. Induction motor according to Claim 1 or 2, characterized in that the outer rotor part (17) consists of a copper hollow cylinder (30).

4. Induction motor according to one of the preceding claims, characterized in that the outer rotor part (17) is designed in the form of a cup and is mechanically connected to the drive shaft (27) in the region of the cup bottom.

5. Induction motor according to one of the preceding claims, characterized in that the drive shaft (27) is designed with stepped diameter, the inner rotor part (16) being arranged freely rotatably on a thinner shaft section (28) within the outer rotor part (17), which is connected on one side to the thicker shaft section (29).

6. Induction motor according to Claim 5, characterized in that the outer rotor part (17) is fastened rigidly on the thicker shaft section (29).

7. Induction motor according to one of the preceding claims, characterized in that a fan (33) is arranged on the inner rotor part (16).

8. Induction motor according to one of the preceding claims, characterized in that the permanent-magnetic inner rotor part (16) is of two-poled design and diametrically magnetized.

9. Induction motor according to one of the preceding claims, characterized in that the inner rotor part (16) is made up of two permanent-magnet half-shells.

10. Induction motor according to one of Claims 1 to 8, characterized in that the inner rotor part (16) is of one-part design of permanent-magnet material.

11. Induction motor according to one of the preceding claims, characterized in that a hub (18), which is preferably formed from plastic, in particular from polytetrafluoroethylene, and is seated with slight bearing play on the drive shaft (27, 28), is fitted axially in the inner rotor part (16).

12. Induction motor according to one of the preceding claims, characterized in that the stator (10) is designed asymmetrically with variable air gap width (14, 21, 22) over the rotor circumference for the generation of a starting torque.

13. Induction motor according to one of the preceding claims, characterized in that a rotational direction blocking device (36, 37), which blocks one direction of rotation of the inner rotor part (16) for the fixing of a defined direction of rotation of the drive shaft (27) is arranged between inner rotor part (16) and outer rotor part (17).

14. Induction motor according to Claim 13, characterized in that the rotational direction blocking device is formed from at least one pawl (53), pivotally held on the outer rotor part (17), and a toothing (54) on the inner rotor part (16).

15. Induction motor according to one of Claims 1 to 12, characterized in that the rotational direction blocking device (36, 37) is arranged between the outer rotor part (17, 30) and a fixed mount (45) of the motor.

16. Induction motor according to Claim 15, characterized in that the rotational direction blocking device consists of at least one pawl (46), pivotally held on a bearing plate (45) of the motor, and a toothing (47) in the region of the bottom (48) of the outer rotor part (17) in the form of a cup.

17. Induction motor according to one of Claims 1 to 12, characterized in that the rotational direction blocking device (36, 37) is arranged between the inner rotor part (16) and a fixed mount (52) of the motor.

18. Induction motor according to Claim 17, characterized in that the rotational direction blocking device consists of at least one pawl (53), held pivotally on a bearing plate (52) of the motor, and a toothing (54) on the inner rotor part (16).

FIG.1

FIG.2

FIG.3

a.)

b.)

FIG.4

a.)

b.)

FIG.5

a.)

b.)